(19) Europäisches Patentamt
European Patent Office
Office européen des brevets

(11) **EP 2 137 076 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**25.04.2018 Patentblatt 2018/17**

(45) Hinweis auf die Patenterteilung:
**26.03.2014 Patentblatt 2014/13**

(21) Anmeldenummer: **08789116.4**

(22) Anmeldetag: **18.04.2008**

(51) Int Cl.:
*B32B 27/12* (2006.01)   *B32B 3/26* (2006.01)
*B65B 1/02* (2006.01)   *B65B 31/02* (2006.01)
*B65D 30/08* (2006.01)

(86) Internationale Anmeldenummer:
**PCT/IB2008/002203**

(87) Internationale Veröffentlichungsnummer:
**WO 2008/139331 (20.11.2008 Gazette 2008/47)**

(54) **ZEMENTSÄCKE**

CEMENT BAGS

SACS DE CIMENT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **18.04.2007   DE 102007018579**

(43) Veröffentlichungstag der Anmeldung:
**30.12.2009   Patentblatt 2009/53**

(73) Patentinhaber: **ABTS - Advanced Bag Technology & Service GmbH**
**24768 Rendsburg (DE)**

(72) Erfinder: **ELKHOULI, Ihab, Abdalla, Radwan Mitgumer (EG)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**WO-A-01/05574       CN-Y- 2 196 086**
**US-A1- 2004 074 803**

**Beschreibung**

Die vorliegende Erfindung betrifft einen Zementsack, nach Anspruch 1.

Es sind verschiedene Arten von Zementsäcken bekannt, um Zement in definierten Portionen transportieren und lagern zu können. Verschiedene Sack-Konstruktionen erfüllen unterschiedliche Punkte, wobei je nach Anwendungsgebiet, Zement-Zusammensetzung und Umweltbedingungen unterschiedliche Anforderungen gestellt werden können. Hierbei könne Punkte wie eine ausreichende mechanische Festigkeit in Abhängigkeit von der Sackgröße, eine hinreichende Barriere gegenüber kleinen Partikeln (Staub), um eine Migration der kleinen Bestandteile des Zements durch das Verpackungsmaterial zu verhindern, hinreichende Barriere gegenüber Feuchtigkeit und/oder eine ausreichende Luftdurchlässigkeit, um einen Druckausgleich während des Befüllens und Abkühlens des Zementsacks zu gewährleisten, eine Rolle spielen.

Je nach den spezifischen Anforderungen können verschiedene Materialkonzepte für Säcke für Baumaterialien zum Einsatz kommen, die unterschiedliche Vor- wie auch Nachteile aufweisen:

Einfache Säcke aus einer oder mehreren Papierlagen die teilweise perforiert sind um eine Luftdurchlässigkeit zu gewährleisten. Dieses geht beispielsweise aus der DE 36 13 749 A1 hervor. Dieses Konzept hat zwar die niedrigsten Kosten, bietet aber auch die Schwierigkeiten, ausreichende mechanische Festigkeit und Schutz vor Feuchtigkeit zu bieten. Dennoch ist der Einsatz dieser Materialien wegen des günstigen Preises noch weit verbreitet. Auch gibt es Weiterentwicklungen, diese sogenannten Kraftpapiere auch bei Grossäcken einsetzen zu können, wie es aus der DE 698 06 168 hervorgeht.

Säcke mit einer oder mehreren Papierlagen und einem perforierten Kunststoff-Film. Gegenüber den reinen Papiersäcken bietet diese Konstruktion eine deutlich verbesserte Barriere gegenüber Feuchtigkeit/Flüssigkeiten. Ein entsprechender für Baumaterialien einsetzbarer Sack geht aus der AT 413 273 B hervor.

Auch existieren Säcke aus gewebten Kunststoff-Bändchen, zumeist aus Polypropylen hergestellt, mit einem perforierten Kunststoff-Film als Barriere gegenüber Flüssigkeiten und Staub. Diese Konstruktion bietet sehr hohe mechanischen Festigkeiten, Beständigkeit gegenüber Wasser und eine hohe Barrierefunktion gegenüber Wasser. Daher werden diese Säcke häufig in Ländern eingesetzt in denen die mechanische Belastung während des Transportes und der Lagerung am höchsten ist, zum Beispiel im Arabischen Raum. Die Kosten für dieses Material ist allerdings verglichen mit den Papiersäcken wegen der Preise von Polypropylen gegenüber Papier wie auch der Herstellung des gewebten Sackes deutlich höher. Es werden mehrere Prozessschritte erfordert, die arbeitsintensiv sind, wie zum Beispiel eine Herstellung des Bändchens, ein Weben der Bänder zu einem Flächengebilde, eine Herstellung des perforierten Films und eine Kombination der Materialien zu einem Flächengebilde aus mehreren Lagen.

Aus der WO 2005/012121 wiederum geht ein Zementsack hervor, der eine Kunststofflage und eine damit verbundene Trägerlage als Wandung aufweisen soll, wobei die Trägerlage ein Gewebe und die Kunststofflage ein auf das Gewebe aufgetragener Heißschmelzklebstoff sein kann, der entweder perforiert oder porös ist. Die Wandung soll gasdurchlässig und wasserundurchlässig sein.

Aus der DE 10 2004 013 469 A1 geht eine Materialkombination von Film und Vlies hervor, bei der das Vlies als Innenlage genutzt wird. Als Außenlage wird ein Film eingesetzt, der luftundurchlässig ist. Der Sack weist einen Überlappungsbereich des Films auf, bei dem ein innenliegender Bereich des Films perforiert ist. Durch eine seitlich verlaufende luftdichte Versiegelung der Überlappung wird eine Entlüftungsbahn gebildet, über die eine Luft beim Befüllen des Sacks austreten soll. Die Außenlage selbst ist außer des Entlüftungsbereichs luft- und wasserundurchlässig. Befüllt werden soll der so gebildete Sack über einen Füllstutzen. Einsetzbar soll der Sack für Zement, Gips, zement- oder gipshaltige Trockenmischungen, Mehl, Futtermittel oder sonstiges sein.

Aus der CN-Y-219 6086 geht ein Zementsack hervor, bei der ein Wasserundurchlässiges Laminat benutzt wird.

Aufgabe dieser Erfindung ist es, einen Baumaterialsack zu schaffen, der von der Herstellung einfach ist.

Die vorliegende Aufgabe wird mit einem Zementsack nach Anspruch 1 gelöst.

Es hat sich überraschend herausgestellt, dass die Nutzung von Vlies und Film, die insbesondere luftdurchlässig sind, eine ausreichende Barrierewirkung für Flüssigkeit zur Verfügung stellen. Dadurch kann insbesondere die Fähigkeit des Vlieses ausgenutzt werden, eine hohe Festigkeit zu liefern, während der Film in der Lage ist, die Barrierewirkung des Vlieses nochmals zu verstärken. Vorzugsweise wird ein einlagiger Film wie auch ein einlagiges Vlies genutzt. Es können jedoch auch mehrlagige Filme bzw. mehrlagige Vliese zum Einsatz kommen. So wird beispielsweise als bevorzugtes Vliesmaterial ein reines Spinnvlies (Spunbond), ein Spunbond-Meltblown-Material, im folgenden SM-Material genannt, insbesondere ein SMS-Materials genutzt. Perforierte Filme sind eine geeignete Ausführungsform luftdurchlässiger Filme.

Erfindungsgemäß weist der Baumaterialsack eine Innenlage und eine Außenlage auf, die jeweils luftdurchlässig sind. Vorzugsweise bildet das Laminat zumindest eine der beiden Lagen, insbesondere aber beide Lagen. Eine Weiterbildung sieht hierbei vor, dass das Vlies außen angeordnet ist und der Film innen. Eine andere Weiterbildung sieht vor, dass das Vlies innen und der Film außen angeordnet ist. Beispielsweise kann der Film ein höheres Basisgewicht aufweisen als das Vlies oder umgekehrt.

Das Laminat wird so aufgebaut, dass das Vlies eine höhere Festigkeit zur Verfügung stellt als der Film, so dass das Vlies sich weniger längt als der Film bei gleicher Kraft. Es ist bevorzugt, wenn das Vlies bei gleicher Belastung sich zumindest um den Faktor 2, insbesondere um zumindest den Faktor 4 weniger dehnt als der Film.

Ein Einsatz von reinem hydrophoben Spinnvlies zum Beispiel aus Polypropylen in Zementsäcken ist eventuell nur sehr eingeschränkt möglich, da die feinen hydrophilen Staubbestandteile des Zements das Spinnvlies teilweise penetrieren und die Struktur hydrophilieren können. Dadurch wird eine Barrierefunktion des Spinnvlieses gegenüber Wasser vollständig aufgehoben und es tritt eine "Schwamm-Effekt" auf, der Flüssigkeit aufnimmt und Flüssigkeitsdurchtritt sogar fördert. Durch die hier vorgeschlagene Kombination von Vliesstoffen, besonders Spinnvlies, mit einem permeablen, perforierten Film, lässt sich dagegen ein sehr kostengünstiges Material für Zementsäcke mit guten Barriere-Eigenschaften gegenüber Feuchtigkeit bei hoher mechanischer Festigkeit fertigen. Überraschenderweise erhält man sehr gute Barriereeigenschaften, wenn man den Film und das Vlies gleichzeitig mit Nadeln perforiert, wobei die Nadeln das Material durch den Film in Richtung Vlies durchstoßen und kegelförmige Öffnungen bilden, die durch das Vlies stabilisiert werden.

Eine Permeabilität des Laminats wird gemäß einer Ausgestaltung derart eingestellt, dass Teilchen mit einem Durchmesser von mehr als $300\,\mu m$ nicht mehr hindurchtreten können. Dadurch gelingt es, den Baumaterialsack für das Baumaterial und insbesondere für Staubpartikel undurchlässig zu gestalten.

Ein permeabler Film kann auf verschiedene Weise hergestellt werden. So wird ein gefüllter Film hergestellt, der anschließend verstreckt wird. Durch das Verstrecken werden Mikroperforationen geschaffen, die eine Luftdurchlässigkeit bewirken. Der Film wird vorzugsweise in Maschinenrichtung wie auch in Querrichtung verstreckt. Dadurch kann das Laminat einen mikroporösen Film aufweisen. Beispielsweise wird hierfür der Film mit dem Füllstoff mit zumindest 20 Gew.-%, insbesondere aber zumindest 30 Gew.-% und vorzugsweise bis zu 50 Gew.-% gefüllt. Durch Verstrecken können auch vorher im Filmmaterial eingebrachte Sollbruchstellen aufgerissen werden, die ebenfalls eine Luftdurchlässigkeit ermöglichen. Eine Mikroporosität kann auch zusätzlich vorgesehen sein, beispielsweise bei einem Film, der verschließbare Öffnungen aufweist.

Wird beispielsweise eine mechanische Perforation des Laminats mit Nadeln ausgeführt, so bewirkt diese eine Durchdringung des Films in das Vlies hinein. Die Vliesfasern können dabei eine durch die Perforation geschaffene Geometrie stabilisieren. Gemäß einer Ausgestaltung ist vorgesehen, dass eine kegelförmige Perforation sich vom Film in das Vlies erstreckt. Erfindungsgemäß ist vorgesehen dass die Perforation eine semipermeable Membran schafft, bei der Flüssigkeit nicht in den Baumaterialsack eindringen, Luft jedoch aus dem Baumaterialsack entweichen kann. Weiterhin kann vorgesehen sein, dass die Perforationen Mikroperforationen sind.

Eine Perforierung kann auf verschiedene Weise ermöglicht werden. Neben einer Wasserstrahlperforierung kann eine Nadelperforierung ausgeführt werden. Auch besteht die Möglichkeit der Perforierung durch Energiezuführung, beispielsweise in Form von Ultraschall. Es kann eine Perforation aber ebenfalls durch Elektronenentladung ausgeführt werden. Bei der Perforierung kann beispielsweise nicht nur der Film sondern auch das Vlies und/oder eine andere Lage ebenfalls perforiert werden. Gemäß einer Ausgestaltung ist hierbei vorgesehen, dass dadurch eine Verbindung zwischen den Lagen geschaffen wird. Die Verbindung kann durch dabei durch kraftschlüssige und/oder formschlüssige Mechanismen bewirkt werden. So kann ein Ineinanderhaken von Materialien verschiedener Lagen erfolgen wie auch ein thermisches Verkleben dieser Materialien. Beispielsweise kann eine thermoplastische Mehrlagenstruktur so perforiert werden, wie es aus der DE 101 32 196 A1 hervorgeht, auf die im Rahmen dieser Offenbarung vollumfänglich verwiesen wird.

Zusätzlich oder alternativ zu einer Verbindung der Lagen des Laminats untereinander wird gemäß einer weiteren Ausgestaltung vorgesehen, dass die Lagen des Laminats miteinander verklebt sind. Ein Verkleben kann über einen Hotmelt-Auftrag erfolgen. Der Kleber wird beispielsweise aufgesprüht. Er kann aber auch durch Rollenauftrag appliziert werden. Der Kleber kann als Partikel, als Flüssigkeit, als Faser oder in sonstiger Form zur Verfügung gestellt werden.

Eine weitere Ausgestaltung sieht vor, dass das Laminat für den Baumaterialsack dadurch hergestellt wird, dass der Film auf das Vlies extrudiert ist. Es besteht ebenfalls die Möglichkeit, dass das Vlies direkt auf einem vorgefertigten Film abgelegt und mit diesem verbunden wird.

Um eine Kennzeichnung des Baumaterialsacks zu ermöglichen, kann vorgesehen sein, diesen mit einem oder mehreren Etiketten zu versehen. Ebenfalls besteht die Möglichkeit, die Außenseite des Baumaterialsacks zu bedrucken. Eine weitere Möglichkeit besteht darin, eine Lage des Laminats zu bedrucken, die von einer Außenlage des Baumaterialsacks überlagert wird. Beispielswiese hierfür kann es vorteilhaft sein, wenn das Vlies zumindest opak ist. Das Vlies kann beispielsweise eine bedruckte Filmlage bedecken. Auch besteht die Möglichkeit, dass das Laminat Lagen mit unterschiedlicher Färbung aufweist. Dadurch kann eine Kennzeichnung des Baumaterialsacks hinsichtlich seines Inhalts ebenfalls vorgenommen werden. Eine andere Möglichkeit besteht darin, dass das Laminat oder eine Lage davon ein Relief aufweist. Das Relief kann beispielsweise durch entsprechendes Prägen erfolgen. Beispielsweise kann bei einer Seitenwand des Baumaterialsacks in speziellen Bereichen unter Hitzeeinwirkung gezielt die Oberfläche verändern worden sein. Mittels einer derartigen Reliefbildung kann insbesondere durch Unterstützung einer Bedruckung ein besonderer Effekt erzielt werden.

Eine Weiterbildung sieht vor, dass das Laminat eine Verstärkung aufweist, vorzugsweise ein Gittermaterial. Das Gittermaterial kann ein thermoplastisches Material aufweisen. Es kann aber auch ein anderes Kunststoffmaterial sein. Auch besteht die Möglichkeit, anderes hochfestes Gittermaterial zu verarbeiten.

Vorzugsweise weist der Baumaterialsack ein Laminat auf, welches eine Luftdurchlässigkeit nach EDANA Norm 140.1 von zumindest 20 l/m$^2$/s aufweist. Dieses ermöglicht eine Befüllung des Baumaterialsacks, ohne dass eine Sack enthaltene Luft nicht entweichen könnte.

Eine besonders enge Verbindung des Baumaterialsack ergibt sich, wenn ein Material des Vlieses und ein Material des Films zumindest durch Hitzeeinwirkung miteinander verklebt sind, insbesondere verschweisst. Hierfür kann ein Thermobondierschritt ausgenutzt werden. Aber auch die Möglichkeit der Heißextrusion des Filmmaterials ermöglich zumindest ein oberflächliches Ankleben, insbesondere aber auch ein zumindest teilweises Eindringen in Lücken zwischen den Vliesfasern.

Bevorzugt ist es, wenn zumindest das Laminat biologisch abbaubar ist. Das Vlies und/oder der Film können beispielsweise hierfür aus auf Stärke basierendem Polymer wie auch aus PLA gefertigt sein.

Der Baumaterialsack kann faltbar insbesondere rollbar sein und damit flexibel; das Material kann aber auch eine Steifigkeit aufweisen, so dass der Baumaterialsack beispielsweise seine Form auch nach Befüllen und Entleeren mit Baumaterial beibehält.

Gemäß einem weiteren Gedanken der Erfindung wird ein Verfahren zur Herstellung eines Baumaterialsacks, insbesondere eines Zementsacks nach Anspruch 17 vorgeschlagen.

Eine Weiterbildung sieht vor, dass bei dem Verfahren ein Laminat erzeugt wird, dass im ungefüllten Zustand des Baumaterialsacks zunächst zumindest wasserdampfdurchlässig, vorzugsweise aber wasserdurchlässig, nach Befüllen des Baumaterialsacks aber wasserundurchlässig wird. Auch kann das Laminat nach Befüllen ebenfalls annähernd dampfundurchlässig werden. Eine Weiterbildung sieht vor, dass bei dem Verfahren ein Laminat erzeugt wird, dass im ungefüllten Zustand des Baumaterialsacks zunächst zumindest wasserdampfdurchlässig, eventuell auch luftdurchlässig, vorzugsweise aber wasserdurchlässig, nach Befüllen des Baumaterialsacks aber zumindest wasserundurchlässig ist. Auch kann das Laminat nach Befüllen ebenfalls annähernd dampfundurchlässig sein. Es kann ein Film eingesetzt werden, der nach dem Befüllen seine Öffnungen verschließt und vorzugsweise nicht einmal mehr luftdurchlässig ist. So kann beispielsweise ein Schrumpffilm Verwendung finden, der aufgrund der wirkenden Hitze des eingefüllten Zements die enthaltenen Öffnungen durch Wärmeeinwirkung verschließt. Auch können Öffnungen aufgrund einer trichterförmigen Gestaltung des Films durch den wirkenden Druck des Zements sich verschließen.

Vorzugsweise wird das Laminat weiterverarbeitet, wobei eine Innenfläche des Baumaterialsacks durch den Film gebildet wird und eine Außenfläche des Baumaterialsacks durch das Vlies. Beispielsweise ist vorgesehen, dass in einer ersten Station das Laminat und aus dem Laminat in einer zweiten Station der Baumaterialsack hergestellt wird, wobei ein Transport des Laminats zwischen der ersten und der zweiten Station innerhalb eines Betriebsgeländes, insbesondere eines Gebäudes erfolgt, und eine Befüllung des Baumaterialsacks mit dem schüttfahigen Material in einer dritten Station erfolgt, wobei eine Vielzahl an Baumaterialsäcken zur automatischen Bestückung einer automatischen Befüllung in der dritten Station zusammengestellt werden.

Eine Weiterbildung sieht vor, dass in einer ersten Station mittels einer Spinnvliesanlage ein Spinnvlies hergestellt wird und in einer Laminieranlage mit einem Filmmaterial verbunden wird, wobei eine Herstellung einer Luftdurchlässigkeit des Laminats nachfolgt.

Vorzugsweise wird bei dem Verfahren eine Perforierung des Laminats unter Wärmeeinwirkung vollzogen, wobei eine Nadelperforationseinrichtung in einem Bereich ihrer Nadeln auf eine Temperatur oberhalb einer Glasübergangstemperatur, insbesondere einer Schmelzpunkttemperatur des Films, und einer Glasübergangstemperatur des Vlieses aufgeheizt wird. Vorrichtungen, mit denen eine Perforation ausführbar ist, gehen beispielsweise aus der EP 1 425 143 A1 und der EP 1 425 161 A1 hervor, auf die diesbezüglich im Rahmen dieser Offenbarung vollumfänglich verwiesen wird.

Das Laminat wir beispielsweise bis zu einem größten Durchmesser der Perforationen von maximal 2 mm perforiert. Eine andere Ausgestaltung sieht vor, dass das Laminat bis zu einem größten Durchmesser der Perforationen von maximal 0,4 mm perforiert wird.

Das Verfahren kann beispielsweise derart ausgeführt werden, dass ein Vlies verwendet wird, bei dem zumindest ein erstes und ein zweites Polymer zusammen eine Vliesfaser bilden und wobei zumindest eines der beiden Polymere mit einem Material des Films aufgrund von Hitzeweinwirkung zumindest verklebt, vorzugsweise verschweißt wird, wobei eine Stabilisierung von trichterförmig verlaufenden Öffnungen erfolgt.

Vorzugsweise wird bei der Herstellung des Laminats oder in einem anderen Schritt bei der Herstellung des Baumaterialsacks vorgesehen, dass Öffnungen im Laminat gebildet werden, die bei Druckwirkung sich verschließen. Vorzugsweise schließen bei einer Innenbelastung des Films durch Befüllen des Baumaterialsacks sich im Film vorhandene Öffnungen. Beim Befüllen des Baumaterialsacks herrscht vorzugsweise ein Überdruck auf seinen Innenraum. Durch Poren bzw. Öffnungen im Laminat kann die Luft entweichen. Je nach Füllstand des eingefüllten Zements ist es aber hierfür beispielsweise nur notwendig, dass diejenigen Poren bzw. Öffnungen noch offen sind, die noch nicht auf der Füllhöhe des Zements sondern darüber liegen. Durch eine entsprechende Ausrichtung von Geometrien im Film und/oder Vlies kann damit beeinflusst werden, ob diese beispielsweise geöffnet bleiben oder aber sich durch den Zement verschließen lassen. Die Öffnungen können beispielsweise durch ein Zusammendrücken von Filmmaterial zumindest partiell verschlossen werden. Beispielsweise können dazu röhrenähnliche Geometrien im Filmmaterial geformt sein. Werden diese seitlich mit Druck belastet, verschließen sie sich. Derartige Röhren können aber auch ohne Perforationsschritt erzeugt werden. So kann das Filmmaterial durch Anhaftung an einer Fläche, insbesondere an einer Walze eine vulkanförmige Mikrooberfläche erhalten. Diese Mikrovulkane sind hohl. Die derart gebildeten Strukturen können auch zylinderförmig oder in sonstiger Weise verlaufen, insbesondere von einer Oberfläche des Filmmaterials abstehen. Es besteht auch die Möglichkeit, dass hierfür das Filmmaterial in eine mit entsprechenden Negativgeometrien versehene Matrixoberfläche zum Teil eingelassen, insbesondere eingepresst wird. Verschiedene mögliche grundsätzliche Aufbauten einer derartigen Vorrichtung sind aus der DE 198 43 109 A1, der DE 101 02 501 A1, der DE 100 35 597 A1 und/oder der DE 100 36 780 A1 zu entnehmen. Aus der EP 1 198 339 B1 sind verschiedne Materialien und Vorrichtungen, Hinweise auf weiteren Stand der Technik diesbezüglich gegeben, wobei auf diese Druckschrift und auf den dort genannten Stand der Technik im Rahmen der diesbezüglichen Offenbarung ebenfalls verwiesen wird Derartige Kegeln können gemäß einer Weiterbildung auch von Innen nach Außen sich erstrecken. Dieses ermöglicht ein Verschließen beispielsweise spätestens bei Druck von Außen wie bei einer Lagerung gefüllter Säcke über- und nebeneinander. Auch können sich die Geometrien selbst durch den Zement verschließen, wenn dieser in die Geometrien eintritt und diese verstopft. Beispielsweise kann der Zement erhitzt eingeführt werden und backt dadurch in den Öffnungen fest. Dadurch kann kein Zement nachfolgen und die Geometrie setzt sich voll.

Als bevorzugt hat es sich erwiesen, wenn das Laminat nur aus einer Vlieslage und aus nur einer Filmlage hergestellt wird. Das Laminat weist vorzugsweise eine dynamische Barriereeigenschaft auf, die gegenüber Wasser bei mehr als > 95% liegt, wobei das Laminat vorzugsweise ebenfalls eine Luftdurchlässigkeit nach EDANA 140.1 von mehr als 20 l/m$^2$/s aufweist. Die Messmethodik zur Bestimmung der dynamischen Barriereeigenschaft wird nachfolgend noch näher dargestellt:

    Vorzugsweise wird das Laminat mit Öffnungen versehen, wobei zur Fertigung in einem Prozessschritt durch Kombination einer Vliesanlage mit einer Film-Extrusionsanlage, einem Kalander, einer Nadelperforationswalze und einem Wickler das perforierte Laminat hergestellt wird. Bevorzugt handelt es sich bei der Vliesanlage um eine Spinnvliesanlage. Eine weitere Ausgestaltung bei der Perforation des Laminats sieht vor, dass der Kalander über eine zum Film gerichtete glatte Walze und eine zum Vlies gerichtete gravierte Walze verfügt.

Der Baumaterialsack kann ein oder mehrere Vlieslagen aufweisen. Es können hierfür die gleiche Vliesart wie auch unterschiedliche Vliesarten eingesetzt werden. Beispielsweise wird ein Spinnvlies, ein kardiertes Vlies, ein SMS-Material, ein Airlaidmaterial, ein Spunlacematerial, ein Meltblownmaterial, ein elastisches Vlies, ein Bikomaterial und/oder ein Vlies verwendet, dessen Fasern bzw. Filamenten spezifische Geometrien aufweisen, zum Beispiel trilobal sind, oder andere Geometrien aufweisen, insbesondere vom Querschnitt her nicht rundgeformt sind.

Eine bevorzugte Ausgestaltung des Baumaterialsacks und deren Herstellung sieht vor, dass ein Laminat mit einem Flächengewicht von zumindest 30 g/m$^2$, insbesondere zumindest 40 g/m$^2$, vorzugsweise zwischen 40 g/m$^2$ und 150 g/m$^2$, verwendet wird. Zumindest ein Handgriff wird vorzugsweise an einer Seitenwand des Baumaterialsack befestigt, insbesondere angeschweißt. Ein Material für den Handgriff kann ein Spinnvlies mit einem Flächengewicht von zumindest 70 g/m$^2$, vorzugsweise zwischen 80 g/m$^2$ und 100 g/m$^2$ sein.

Als Materialien für den Baumaterialsack kommen insbesondere thermoplastische Materialien in Frage. Das verwendete Polymer kann isotaktisch oder ataktisch sein. Gemäß einer Ausgestaltung besteht die Möglichkeit, dass der überwiegende Bestandteil des Baumaterialsacks aus Polypropylen, einem polypropylenhaltigen Polymer bzw. einem Co-Polymer wie auch aus einem Bikomponenten- bzw. Multikomponenten-Material hergestellt wird. Vorzugsweise weist das Bikomponenten-Material zumindest teilweise, vorzugsweise vollflächig Polyethylen an der Oberfläche auf, während im Inneren ein anderes Polymer, vorzugsweise Polypropylen, angeordnet ist. Auf diese Weise kann das Polypropylen eine hohe Festigkeit zur Verfügung stellen, während das Polyethylen geeignet ist, einen besonders angenehmen Tragekomfort sicherzustellen, wenn der Baumaterialsack händisch zu transportieren ist. Zum anderen ermöglich die Verwendung eines Polyethylens eine bessere Verbindung mit einem gleichartigen Filmmaterial. Vorzugsweise ist das Außenmaterial der Faser auf das Filmmaterial des Laminats zumindest abgestimmt, stimmt vorzugsweise sogar überein.

Gemäß einer weiteren Ausgestaltung ist vorgesehen, dass das Laminat, der Film und/oder das Vlies ein Material aufweist, das zumindest eines der folgenden Mitglieder der Gruppe umfasst: PO, PET, biologisch abbaubares Polymer, PP, PE, Co-Polymer, antimikrobielles Additiv, hydrophil wirkendes Additiv, phosphoreszierendes Additiv, fluoreszierendes Additiv, antistatisches Additiv und schmutzabweisendes Additiv aufweist.

Eine Weiterbildung sieht vor, dass eine Vliesbahn eine erhöhte Reißfestigkeit mittels einer Prägung aufweist. Eine Prägefläche beträgt vorzugsweise zwischen 10 % bis 70 % der Vliesbahnfläche, insbesondere zwischen 15 % und 30 %, wobei vorzugsweise eine einzelne Prägefläche eine Größe zwischen 0,05 mm$^2$ und 3 mm$^2$ aufweist. Eine Prägung wird vorzugsweise mittels eines Thermobondierungsschrittes ausgeführt. Die Prägung ist insbesondere derart, dass eine Reißfestigkeit der Vliesbahn in MD-Richtung stärker erhöht wird als in CD-Richtung. Dazu ist beispielsweise vorgesehen, dass eine Hauptachse eines Prägebereichs in CD-Richtung angeordnet ist.

Eine Prägung, insbesondere eine Thermobondierung, wird vorzugsweise mittels eines Prägekalanders ausgeführt, der über entsprechende Erhebungen verfügt. Beispielsweise bilden eine Glattwalze und eine Prägewalze einen Kalanderspalt, wobei zumindest eine der beiden Walzen auf eine Temperatur aufgeheizt ist, die insbesondere ein Anschmelzen des durch den Kalanderspalt hindurchgeführten Vlieses bewirkt. Neben einer Prägung mittels Wärmeeinwirkung besteht des Weiteren die Möglichkeit, eine Verdichtung des Vlieses durch andere geeignete Mittel wie beispielsweise Ultraschall, Wärmestrahlung, Wasserstrahlverfestigung und/oder Einsatz von Klebemittel wie Klebefasern oder ähnliches ausführen zu können.

Das Laminat, insbesondere die einander gegenüberliegenden Seitenwände sind miteinander zumindest in einem Bereich verbunden, insbesondere verschweißt. Es hat sich als vorteilhaft herausgestellt, wenn in dem Bereich einer Verschweißung, vorzugsweise bei Erstellung einer Kante, zumindest das dortige Material ein Co-Polymer ist. Das Co-Polymer kann beispielsweise Polypropylen und Polyethylen aufweisen. Durch die Verwendung des Co-Polymers wird erzielt, dass eine bessere Materialverbindung bei Verschweißung eintritt. Vorzugsweise bei Verwendung von PP und/oder PE wird bei Ultraschallverschweißung eine Frequenz in einem Bereich zwischen 10.000 Hz bis 30.000 Hz verwendet, um die Energie in das Material einzubringen.

Eine Verbindung von Enden eines Laminats kann beispielsweise in überlappender Weise erfolgen. Beispielsweise können dazu breite Bereiche miteinander verschweißt werden. Eine andere Möglichkeit besteht darin, dass einander gegenüber angeordnete Kanten auf Stoß liegen. Beispielsweise kann zusätzlich Vliesmaterial bzw. Polymermaterial zugegeben werden, um eine Aneinanderfügung des Laminats zu ermöglichen. Eine Fügung des Laminats kann beispielsweise im Bereich einer Seitenwand angeordnet sein. Es besteht jedoch ebenfalls die Möglichkeit, dass die Fügung in einer Querseite des Baumaterialsacks angeordnet ist. Gemäß einer weiteren Ausgestaltung ist vorgesehen, dass im Bereich eines Bodens eine oder keine Aneinanderfügung von Laminat vorliegt. Vorzugsweise kann dazu beispielsweise das Laminat soweit in eine Seitenwand bzw. eine Querseite des Baumaterialsacks hochgezogen werden, dass die Aneinanderfügung des Laminats erst dort erfolgt. Im übrigen besteht auch die Möglichkeit, dass der Baumaterialsack einen oder mehrere Bereiche aufweist, wo ein Laminat verwendet ist, welches einen Abschnitt aufweist, bei dem nur Vlies oder nur Film vorliegt.

Ein Aneinanderfügen kann beispielsweise auch unter Nutzung eines Filmmaterials erfolgen. Beispielsweise kann der Film ein zusätzliches Polymermaterial zur Verfügung stellen, welches zusätzlich im Bereich einer Nahtbildung mitverwendet wird. Neben einem Verschweißen kann auch ein Verkleben wie auch andere Verbindungstechniken zusätzlich oder anstelle des Verschweißens eingesetzt werden.

Des Weiteren ist vorzugsweise vorgesehen, dass besonders im Bereich von Aneinanderfügungen von Seitenkanten, beispielsweise durch Verschweißung, eine höhere Dehnung vorgesehen ist als in einem übrigen Bereich des Laminats. Beispielsweise kann dieses durch eine entsprechende Ausgestaltung einer Prägung vorgesehen sein, bzw. über eine entsprechende Ausgestaltung einer Schweißkante. Dabei kann das im Bereich der Schweißkante verwendete Material eine Puffer- bzw. Dämpfungswirkung aufweisen. Beispielsweise ist das dort verwendete Material elastischer bzw. dehnfähiger als in den übrigen Bereichen des Baumaterialsacks sein.

Vorzugsweise ist eine Naht oder eine Materialkante am Baumaterialsack nicht von einem Ende zum anderen geradlinig verlaufend. Vielmehr weist diese eine wellige, mehrfach die Richtung wechselnde, eine Zick-Zack-Struktur oder andere Verläufe auf. Dadurch wird eine größere, insbesondere längere Naht bzw. Kante und damit eine stärkere Verbindung geschaffen.

Neben einer Verbindung von ein oder mehreren flächigen Lagen zur Erstellung des Baumaterialsacks wird das Laminat vorzugsweise entweder vorher oder nachher beschichtet. Des Weiteren besteht die Möglichkeit, dass die Vliesbahn eine Barrierewirkung aufweist. Beispielsweise bildet das Vlies eine derartige Barriere, dass es wasserdampfdurchlässig und wasserundurchlässig ist, wobei die Vliesbahn vorzugsweise eine Wassersäule von zumindest 200 mm, insbesondere bis zu 1000 mm aufweist. Hierzu kann das Vlies bei beispielsweise als Meltblown-Spinnvlies-Laminat aufgebaut sein. Vorzugsweise ist das Vlies auch derart luftdurchlässig eingestellt, dass eine Luftdurchlässigkeit in einem Bereich zwischen 100 bis 5000 l/m$^2$/sec., vorzugsweise zwischen 1000 bis 3000 l/m$^2$/sec liegt.

Vorzugsweise kann der Baumaterialsack an ein oder mehreren Stellen oder Bereichen auch eine Verstärkung aufweisen. Ein Bereich kann hierbei ein Haltebereich sein. In diesem kann beispielsweise eine Tragehilfe, insbesondere ein Henkel oder Griff angeordnet sein. Auch kann in einem Bereich eines Bodens eine Verstärkung vorgesehen sein. Beispielsweise kann die Verstärkung durch einen Einsatz erfolgen, der insbesondere auch formgebend für den Baumaterialsack ist. Die Verstärkung kann flexibel wie auch starr sein. Sie kann aus ein oder mehreren Schichten bestehen. Das Material der Verstärkung kann ein Kunststoff sein, insbesondere aus einem Polymer, aus dem das Laminat und insbesondere das Vlies hergestellt ist. Auch kann das Laminat selbst oder ein Vlies als Verstärkung genutzt werden. Bei einem Griff kann eine Griffverstärkung einerseits einen Bereich einer Fügung zwischen der eigentlichen Tragetasche und dem Griff zur Verfügung stellen. Beispielsweise kann ein zusätzliches Material zur Verfügung gestellt werden, welches eine Verbindung mit einem Material des Griffs ermöglicht. Des Weiteren besteht die Möglichkeit, dass die Verstärkung ein Ausreißen von ein oder mehreren Griffen verhindert. Hierzu kann die Verstärkung mit dem Griff und einer Seitenwand des Baumaterialsacks zusätzlich jeweils verbunden sein. Auch besteht die Möglichkeit, eine Verstärkung im Bereich eines eigentlichen Griffbereichs vorzusehen. Eine derartige Verstärkung kann beispielsweise in einer Verbreiterung des Griffbereiches liegen, wodurch ein Einschneiden der Griffe in eine Handfläche vermieden wird. Insbesondere wird eine Verstärkung dazu auch genutzt, eine Verbreiterung einer Angriffsfläche der Griffe zum Tragen und damit zum Abstützen in einer Hand zu ermöglichen. Dazu kann die Verstärkung beispielsweise aus Pappe, Papier, aus Schaumstoff oder ähnlichem bestehen.

Beispielsweise wird das Verfahren zur Herstellung der Baumaterialsacks so ausgeführt, dass das Laminat unter Verwendung des Vliesbahn zur Verfügung gestellt, wobei das Laminat in MD-Richtung des Vlieses gefaltet wird, das bedeutet in Maschinenrichtung, der Herstellungsrichtung des Vlieses in der Maschine, und einander gegenüberliegende Seiten des Laminats zu Seitenwänden des Baumaterialsacks verarbeitet werden, wobei das Laminat derart verarbeitet wird, dass sich das Vlies von einem Boden des Baumaterialsacks zu einer Einfüllöffnung hin in CD-Richtung erstreckt.

Die nachfolgenden Figuren zeigen :

Fig. 1 : eine beispielhafte Ansicht einer ersten Ausgestaltung eines Baumaterialsacks,
Fig. 2 : eine erste beispielhafte Ausgestaltung einer ersten und einer zweiten Station zur Herstellung eines Laminats, das zur Herstellung des Baumaterialsacks eingesetzt wird,
Fig. 3 : eine zweite Ausgestaltung einer Anlage zur Herstellung des Laminats,
Fig. 4 : eine Zuführung eines Vlieses zur Herstellung des Laminats,
Fig. 5: ein nicht erfindungsgemäßes Ausführungsbeispiel,
Fig. 6: eine Bestimmung einer dynamischen Barriere des Laminats,
Fig. 7 : eine weitere Anlage zur Herstellung und Befüllung eines Baumaterialsacks, und
Fig. 8 : eine beispielhafte schematische Ansicht einer Oberfläche eines Laminats.

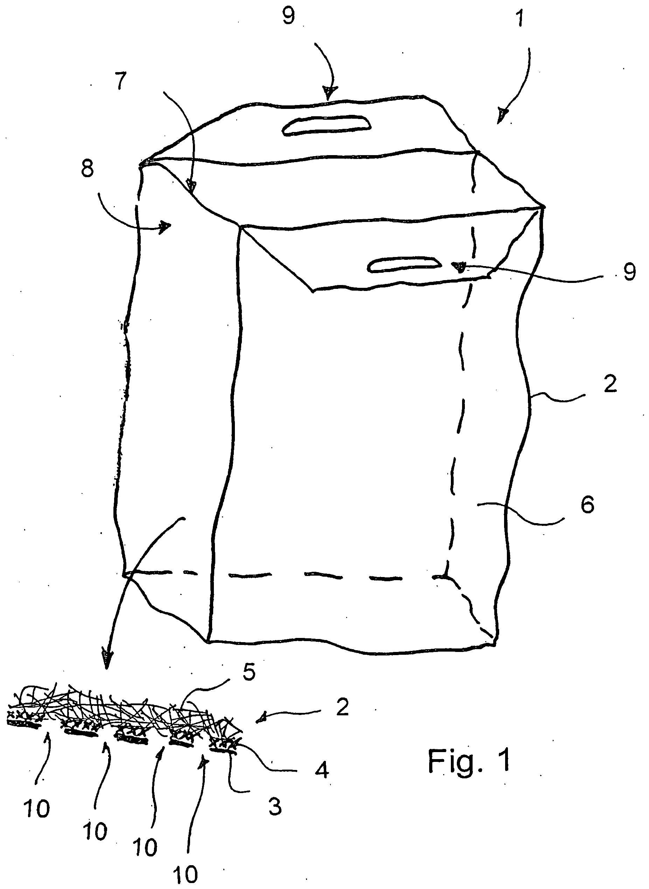

Fig. 1 zeigt eine beispielhafte Ansicht einer ersten Ausgestaltung eines Baumaterialsacks 1. Der Baumaterialsack 1 kann insbesondere eine längliche Erstreckung aufweisen, wobei er eine annähernd quaderförmige Gestalt aufweist. Zur Herstellung des Baumaterials 1 wird ein Laminat 2 eingesetzt. Vorzugsweise ist der Baumaterialsack 1 ausschließlich aus dem Laminat 2 hergestellt. Eine beispielhafte Ausgestaltung des Laminats 2 ist vergrößert dargestellt. Hierbei ist eine erste Lage 3 aus einem Filmmaterial vorhanden, die über eine Verbindung 4, in Form von Kreuzen dargestellt, mit einer zweiten Lage 5 verbunden ist. Die erste Lage ist vorzugsweise ein thermoplastischer Film. Dieser kann beispielsweise dreidimensional verformt sein. Die zweite Lage ist ein Vlies, insbesondere ein Spinnvlies. Die erste Lage 3 wie auch die zweite Lage 5 sind jeweils luftdurchlässig. Das auf diese Weise gebildete Laminat 2 ist damit insgesamt ebenfalls luftdurchlässig. Vorzugsweise weist das Laminat 2, zumindest aber eine Lage davon eine Wassersäule auf, die mindestens 30 cm beträgt. Die Verbindung 4 kann beispielsweise durch eine Kleberschicht, aber auch durch ein Verschmelzen und ein Aneinanderheften der ersten und zweiten Lage 3, 5 ausgeführt sein. Das Laminat bildet zumindest eine Sackwand 6 des dargestellten Baumaterialsackes 1. Hierbei bildet vorzugsweise der Film eine Innenlage 7, während das Vlies eine Außenlage 8 des Baumaterialsacks 1 bildet. Der Baumaterialsack 1 weist vorzugsweise einen Griffbereich 9 auf. Dieser erlaubt ein verbessertes insbesondere händisches Transportieren des Baumaterialsacks 1, insbesondere wenn er gefüllt ist. Der Griffbereich 9 kann in unterschiedlichster Weise ausgeführt sein. Er kann an einem Kopfende des Baumaterialsacks 1 so wie dargestellt vorliegen. Es besteht ebenfalls die Möglichkeit, dass an zwei gegenüberliegenden Längsseiten des Baumaterialsacks 1 jeweils zumindest ein Griffbereich vorliegt. Ein Griffbereich kann jedoch ebenfalls an einer Querseite des Baumaterialsacks 1 vorliegen. Der Griffbereich wird vorzugsweise ebenfalls aus dem Laminat 2 hergestellt. Hierzu kann der Griffbereich 9 auch eine zusätzliche Verstärkung aufweisen. Das Laminat 2 ist vorzugsweise im gesamten verwendeten Bereich des Baumaterialsacks 1 luftdurchlässig. Hierzu sind mehrere Öffnungen 10 im Film vorhanden sein. Die Öffnungen 10 sind durch Perforierung, können aber auch durch Mikroporösitäten gebildet werden. Werden Perforationen hergestellt, sind diese gemäß einer Ausgestaltung in einem regelmäßigen Muster angeordnet. Gemäß einer anderen Ausgestaltung sind die Perforationen unregelmäßig. Des Weiteren erstrecken sich die Öffnungen auch durch die Verbindung 4 und das angeschlossene Vlies. Dieses wird durch eine Perforation erzielt, die durch alle Lagen hindurch geht.

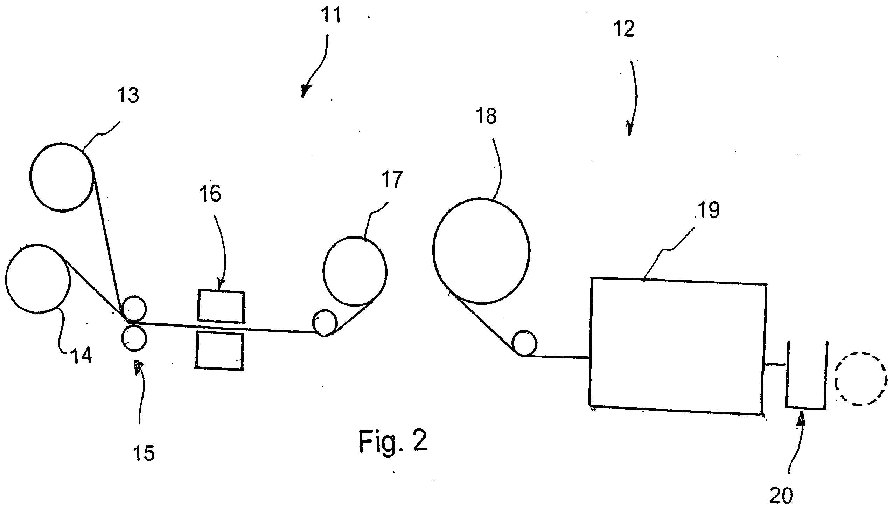

Fig. 2 zeigt eine erste beispielhafte Ausgestaltung einer ersten Station 11 und einer zweiten Station 12, mittels denen ein Laminat und ein Baumaterialsack hergestellt wird. In der ersten Station 11 wird das Laminat hergestellt. Bei der dargestellten Ausgestaltung erfolgt eine Zwischenlagerung des hergestellten Materials. Dieses wird anschließend in der zweiten Station 12 zu einem Baumaterialsack weiterverarbeitet. Die erste Station 11 weist gemäß dieses Ausführungsbeispiels einen ersten Abwickler 13 und einen zweiten Abwickler 14 auf. Vom ersten Abwickler wird ein Vlies zugeführt, vom zweiten Abwickler 14 ein Filmmaterial. Diese werden zu einer ersten Kalandriereinheit 15 geführt. Dort kann beispielsweise unter Wärmeeinfluss ein Verbinden der zueinander geführten Lagen erfolgen. In einer nachfolgenden Bearbeitungseinheit 16 kann beispielsweise das Laminat perforiert werden. Hierzu kann ein Nadelwalzenkalander, einer Wasserstrahlperforierung oder eine sonstige geeignete Vorrichtung eingesetzt werden. So wie dargestellt, wird in der ersten Station 11 das gesamte Laminat perforiert. Die Perforation kann insbesondere derart ausgeführt sein, dass eine Stabilisierung, vorzugsweise einer dreidimensionalen Geometrie, die beispielsweise kegelähnlich ist, durch Ineinanderdringen der Materialien erfolgt. Anschließend wird das so perforierte Laminat auf einem Aufwickler 17 aufgewickelt. Eine derart hergestellte perforierte Laminatrolle kann sodann in einem Zwischenspeicher gelagert werden. Die Herstellung der Baumaterialsäcke kann durch Verwendung einer derart hergestellten Laminatrolle in einer Baumaterialsackherstellungsvorrichtung erfolgen, wie sie als zweite Station 12 nur schematisch angedeutet dargestellt ist. Eine Laminatrolle 18 stellt kontinuierlich das Material zur Weiterverarbeitung in einer Sackherstellungsvorrichtung 19 zur Verfügung. Von dort werden die hergestellten Baumaterialsäcke in einer Zwischenspeicherform 20 zur Verfügung gestellt. Die Baumaterialsäcke können getrennt voneinander und/oder aber zumindest teilweise miteinander verbunden, beispielsweise in einem Karton angeordnet werden. Auch besteht die Möglichkeit, bei einer Verbindung der Baumaterialsäcke untereinander diese aufrollen zu können, wie es durch die gestrichelte Rolle angedeutet ist. Ein Vorteil einer derartigen ersten und zweiten Station 11, 12 ist es, dass der jeweilige spezielle Betrieb kontinuierlich ablaufen kann. Eine Störung in diesem kontinuierlichen Betrieb kann für den nachfolgenden Betrieb dadurch aufgefangen werden, dass aufgrund einer Zwischenspeicherung des notwendigen Materials Pufferzeiten durch eine entsprechende Zwischenlagerung geschaffen werden können. Wird daher eine kontinuierlich laufende Station in ihrem Betrieb zwangsgestoppt, können eine oder mehrere nachfolgende Stationen trotzdem weiterbetrieben werden. Insbesondere vorteilhaft ist es, wenn solche Stationen auf einem Betriebsgelände, insbesondere sogar in einem Hallengebäude zusammen untergebracht sind, wenn diese den gleichen Vorschriften, insbesondere Hygienevorschriften und Anforderungen für die Sauberkeit der Herstellung unterliegen. Auf diese Weise können lange Anfahrtszeiten wie aber auch Dekontaminationen des Materials vermieden werden.

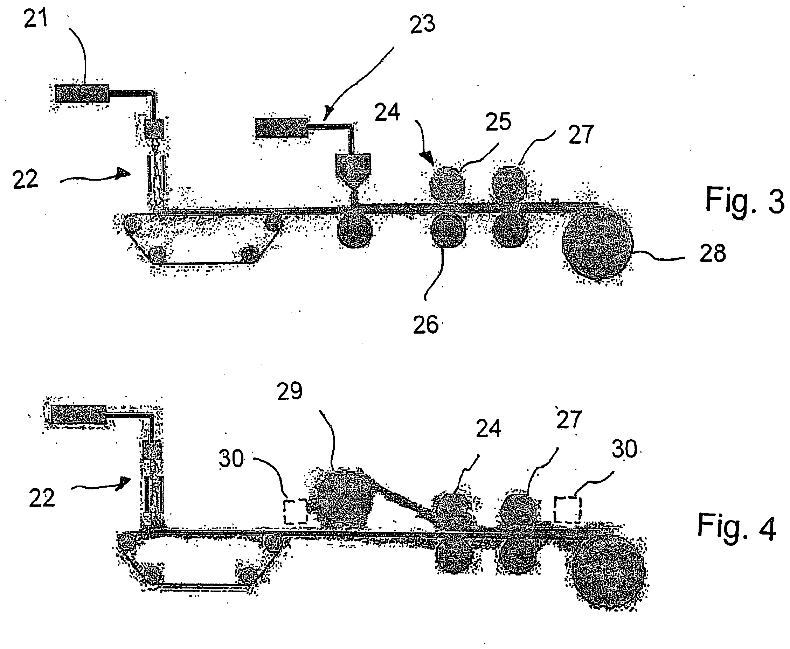

Fig. 3 zeigt eine zweite Ausgestaltung einer Anlage zur Herstellung des Laminats. Hierbei wird über einen Extruder 21 Polymermaterial für eine Spinnvliesvorrichtung 22 aufgeschmolzen. Der Extruder 21 kann ein Einzel- oder auch ein Doppelextruder sein. Auch besteht die Möglichkeit, Additive dem Extruder zuzugeben, sofern nicht dieses durch eine entsprechende Compoundierung des Polymermaterials erfolglist. Ein Doppelextruder ermöglicht die Herstellung von insbesondere Bikomponentenmaterialien, vorzugsweise von Kernmantelfasern. Die beispielhaft dargestellte Spinnvliesvorrichtung 22 kann eine Spinnvliesanlage sein. Derartige Anlagen werden als Turn-Key-Anlagen von verschiedenen Herstellern zur Verfügung gestellt. Hersteller können hierbei die Firmen Neumag, Reifenhäuser, STP Impianti wie auch andere sein. Die Spinnvliesvorrichtung 22 kann jedoch auch durch eine andere Vliesherstellvorrichtung wie beispielsweise eine Kardieranlage oder Ähnliches ersetzt werden. Es wird durch den Betrieb der Spinnvliesvorrichtung 22 die Dicke der Filamente bzw. Fasern wie auch die Grammatur der Vlieslage und damit insbesondere Eigenschaften wie Luftdurchlässigkeit und Wassersäule eingestellt. Gemäß der aus Fig. 3 hervorgehenden Anlage wird das unverfestigte Vlies auf einem Siebband abgelegt und anschließend einer Filmextrusionsanlage 23 zugeführt. Dabei wird ebenfalls über einen Extruder Material aufgeschmolzen und sodann auf das unverfestigte Vlies aufgetragen. Bei dieser Polymerbeschichtung kommt es zumindest zu einem Anhaften des zugeführten entweder noch flüssigen oder noch stark erhitzten Films, so dass Vliesfasern und Film zumindest aneinander geheftet werden, eventuell auch miteinander verschmelzen. Das auf diese Weise gebildete Laminat wird anschließend in einem Thermobondierkalander 24 verfestigt. Vorteilhaft ist es hierbei, dass eine Glattwalze 25 gegen den Film und eine Prägewalze 26 gegen das Vlies presst. Das auf diese Weise verfestigte Film-Vlies-Laminat wird anschließend einer Perforationseinheit 27 zugeführt. Vorzugsweise ist, so wie schematisch angedeutet, die Perforationseinheit eine Nadelwalzenkalandereinrichtung. Die Nadelwalze ist vorzugsweise beheizt, wobei darüber die Nadeloberflächen temperiert werden können. Die Temperatur ist auf das verwendete Polymermaterial des Vlieses und/oder des Films einstellbar. Vorzugsweise stechen die Nadeln auf der Filmseite ein, um dadurch eine in die Vlieslage gerichtete Kegelstruktur zu schaffen. Hierbei werden Fasern des Vlieses bei der Perforation umorientiert, ohne dabei durch den Perforationsvorgang geschädigt zu werden. Wird beispielsweise eine Nadeloberflächentemperatur so eingestellt, dass ein Überschreiten einer Glasübergangstemperatur des Vliespolymers erfolgt, bildet das Vlies eine Stützstruktur für die kegelförmige, in das Vlies gerichtete Öffnung des Films, die wiederum für eine Barrierewirkung gegenüber Flüssigkeit von Bedeutung ist. Gemäß einer Ausgestaltung ist daher vorgesehen, dass das Polymermaterial des Films höher schmelzend ist als das Polymermaterial des Vlieses. Gemäß einer anderen Ausgestaltung ist vorgesehen, dass das Polymermaterial des Films niedrig schmelzender ist als das Polymermaterial des Vlieses. Auf diese Weise kann gezielt ausgewählt werden, welche der beiden Lagen die andere Lage durch ein entsprechendes Anschmelzen und insbesondere Anheften der verschiedenen Strukturen Unterstützung schaffen soll. Vorteil der in Fig. 3 dargestellten Anlage ist ein kontinuierlicher Herstellungsprozess, da durch ausreichende Nachführung von Ausgangsgranulat für die Herstellung des Vlieses bzw. des Films eine derartige Anlage rund um die Uhr ohne Unterbrechung betreibbar ist. Im Anschluss an die Perforationseinheit wird eine Wickeleinheit 28 vorgesehen. Diese weißt vorzugsweise einen automatischen Wechsler auf, so dass ein Rollenwechsel ohne Unterbrechung des Herstellungsvorgangs des Laminats erfolgen kann.

Fig. 4 zeigt eine Zuführung eines Vlieses in einem Semi-Inline-Prozess unter Verwendung von vorgefertigten Filmrollen. Eine Spinnvliesvorrichtung 22 stellt kontinuierlich ein Vlies her. Über eine Abwickeleinheit 29 wird ein Filmmaterial zur Verfügung gestellt. Anschließende Bearbeitungsstationen wie beispielsweise ein Thermobondierkalander 24 und eine Perforationseinheit 27 können nachfolgen. Neben dieser Ausgestaltung besteht ebenfalls die Möglichkeit, dass die Filmlage kontinuierlich hergestellt wird, während das Vlies über eine entsprechende Abwicklereinheit zur Verfügung gestellt wird. Der Anlagenaufbau selbst ermöglicht darüber hinaus die Zwischenschaltung von zusätzlichen Bearbeitungseinheiten 30. Diese sind gestrichelt angedeutet und können an unterschiedlichen Positionen in der Anlage eingesetzt werden. Bearbeitungseinheiten können beispielsweise Beschichtungen auftragen, eine Prägung des Materials bewirken, das Material trocknen, benetzen, oder in sonstiger Weise die chemische, physikalische oder geometrische Struktur der Lage oder des Laminats verändern.

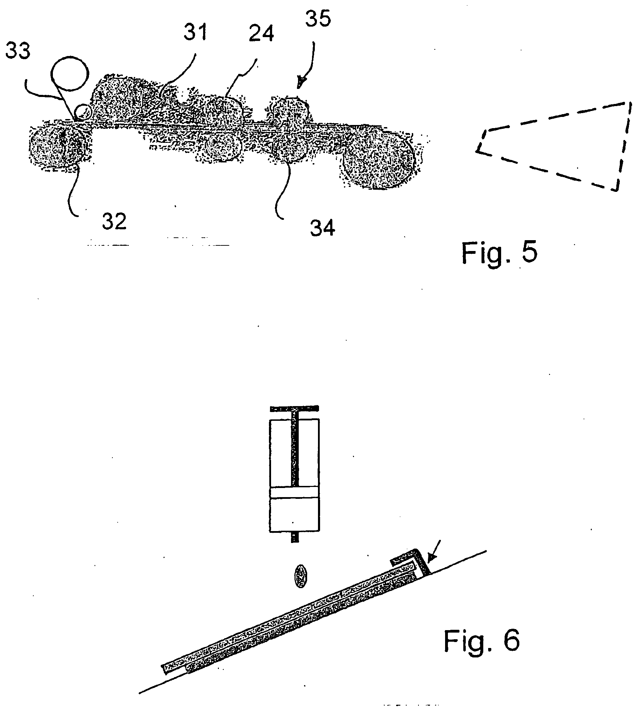

Fig. 5 zeigt eine Zuführung eines vorperforierten Materials, das anschließend in ein Laminat umgewandelt wird. Hierzu wird beispielsweise zwischen ein vorverfestigtes Vlies 31 und einem vorperforiertem Film 32 eine Verstärkungslage 33 zugeführt. Die Verstärkungslage kann eine zusätzliche Vlieslage aber insbesondere auch ein Gitter sein. Das Gitter kann insbesondere eine hohe Festigkeit für das so gebildete Laminat schaffen. Vorzugsweise ist das Gitter aus Polymermaterial, so dass es bei einem Thermobondierungsschritt, wie er durch den Thermobondierkalander 24 angedeutet wird, mit den jeweiligen beiden anderen Lagen verbindbar ist. Durch weitere Zuführung von Wärme, beispielsweise in Form von einem Glattwalzenkalander 34, kann das Laminat und dessen Lagen durch entsprechende Erhitzung der Materialien auf zumindest eine Hafttemperatur besser verbunden werden. Anschließend wird das Material aufgerollt und steht zur Weiterverarbeitung zur Verfügung. Der aus Fig. 5 hervorgehende Anlagenaufbau kann jedoch ebenfalls vorsehen, dass die Filmlage nicht vorperforiert ist. Vielmehr kann die Filmlage auch ein mit Füllstoff gefüllter Film sein. Als Füllstoff bietet sich Kreide oder ähnliches Material an. So kann beispielsweise nach Durchlaufen des Thermobondierkalanders 24 statt des Glattwalzenkalanders 34 ein so genannter Ring-Roll-Kalander 35 vorgesehen sein. Bei diesem Verfahren wird das Laminat vorzugsweise zumindest in eine Richtung, insbesondere aber in CD- wie auch in MD-Richtung verstreckt. Dabei kommt es zu Rissen in der Verbindung zwischen dem Füllmaterial und dem Polymermaterial des Films, wodurch die Filmlage luftdurchlässig wird. Der Ring-Roll-Kalander kann hierfür einen scheibenartigen Aufbau aufweisen, wobei die Scheiben ineinander greifen. Auch können die einander gegenüberliegenden Walzen unterschiedlich tiefe bzw. hohe positiv/negativ Strukturen aufweisen, zwischen das Material teilweise festgehalten und dazwischen verstreckt wird. Darüber hinaus besteht ebenfalls die Möglichkeit, dass ein vorverstreckter Film in der Anlage genutzt wird. Wird eine Verstreckung erst nach Laminierung ausgeführt, wie beispielsweise gestrichelt durch entsprechende Streckrahmen 36, wird vorzugsweise das Vlies mit dem Filmmaterial verklebt. Durch das Verstrecken reißt hierbei eine Klebeschicht, sofern diese nicht diskontinuierlich sondern kontinuierlich aufgetragen gewesen ist, auf. Dadurch entstehen luftdurchlässige Bereiche auch in dieser Verbindung.

Fig. 6 zeigt eine Möglichkeit einer Messmethode zur Bestimmung der dynamischen Barriere gegenüber Flüssigkeiten. Gemäß Fig. 6 Abbildung a) wird der Prüfkörper mit den Abmessungen 15cm x 15cm auf eine Platte mit den Abmessungen 20cm x 20cm auf der ein saugfähiges Filterpapier mit den Abmessungen 14cm x 14cm mittig befestigt, wobei nur der obere Rand des Prüfkörpers auf dem Filterpapier festgeklemmt wird, um dessen Verrutschen zu vermeiden , wobei die Unterlage einen Neigungswinkel von 30° aufweist. Der Prüfkörper überragt das Filterpapier am unteren Ende um 1cm. Es ist darauf zu achten, dass der Prüfkörper in direktem Kontakt mit dem Filterpapier ist.

Mittels eines Kolbens bzw. einer Spritze mit einer Öffnung von 0,5 mm werden 1cm$^3$ destilliertes Wasser aus einer Höhe von 10 cm mittig auf den Prüfkörper getropft, wobei der Vorschub des Kolbens so eingestellt wird, dass sich einzelne Tropfen lösen. Dieser Vorgang wird an 4 Stellen des Prüfkörpers wiederholt, die jeweils einen Abstand von mindestens 1 cm zueinander haben, so dass insgesamt 4 cm$^3$ destilliertes Wasser auf den Prüfkörper getropft worden sind. Bei der Versuchsdurchführung ist darauf zu achten, dass das Filterpapier nicht durch ablaufendes Wasser benetzt wird (der Prüfkörper muss das Filter-papier am unteren Ende um mindestens 1cm überragen).

Durch Wägung des Filterpapiers vor und nach Auftropfen des Wassers wird der Anteil des Wassers bestimmt, der den Prüfkörper penetriert hat. Die dynamische Barriere wird definiert als das Ergebnis aus:

$$(a - b)/a * 100$$

mit a = Gesamtmenge der Prüfflüssigkeit [g] (4cm$^3$

entspricht 4 g)

b = Gewichtszunahme des Filterpapiers (Menge der penetrierten Flüssigkeit [g]

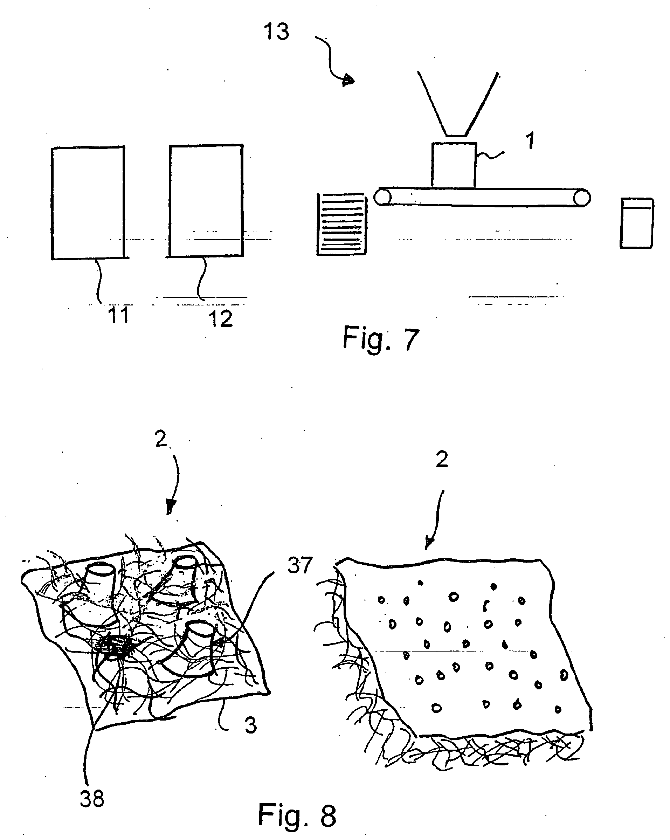

Fig. 7 zeigt in schematischer Ansicht eine weitere Anlage zur Herstellung und Befüllung eines Baumaterialsacks. Schematisch sind die erste Station 11 die zweite Station 12 dargestellt. Eine dritte Station zeigt schematisch beispielhaft ein Befüllen des Baumaterialsacks 1. Ein Vorteil des verwendeten Laminats 2 ist hierbei, dass eine antistatische Beschichtung bzw. ein Additiv Verwendung finden kann, was antistatisch wirkt. Da bei der Befüllung des Baumaterialsacks 1 auch sehr feinkörniges Pulver eingeführt wird, erlaubt die Verwendung von Antistatika ein verbessertes Füllverhalten. Des Weiteren wird ungewolltes elektrostatisches Aufladen in Anlagenbereichen dadurch vermieden. Nach dem Befüllen des Baumaterialsacks wird dieser verschlossen. Ein Verschließen erfolgt ebenfalls vorzugsweise automatisch. Das Laminat 2 ermöglicht verschiedene Wege, den Baumaterialsack 1 herstellen zu können. Ein Verschließen wie aber auch eine Geometrieverformung kann dabei mittels Klebung, Verschweißung oder in sonstiger Weise erfolgen.

Fig. 8 zeigt zwei Möglichkeiten, wie das Laminat luftdurchlässig gestaltet sein kann. Während die linke Abbildung der Fig. 8 ein Laminat 2 zeigt, bei dem in der ersten Lage 3 Perforationen zu vulkanähnlichen Geometrien, die vom Film in das Vlies gerichtet sind 37 geführt haben, weist ein rechtes Laminat Mikroperforationen auf, die schematisch angedeutet sind. Perforationen müssen nicht automatisch zu vulkanähnlichen Geometrien 37 oder vergleichbaren Ausstülpungen des Filmmaterials führen. Vielmehr kann das Filmmaterial auch annähernd eben nach einer Perforation verbleiben. Eine Verbindung der Lagen des Laminats 2 erfolgt beispielsweise auch über Verschmelzungen, Anhaftungen oder auch Verschweißungen, wie dieses beispielsweise durch einen Thermobondierbereich 38 angedeutet ist. Der Thermobondierbereich 38 verfestigt einerseits das Vlies und schafft andererseits ein Verbinden der Vlieslage mit der Filmlage. Dieses kann durch ein gegenseitiges oberflächliches Anhaften wie auch durch ein Ineinanderverschmelzen erfolgen.

**Patentansprüche**

1. Zementsack zum Transport und Lagern von definierten Portionen schütt- und rieselfähigen Zements, vorzugsweise von zumindest 15 kg bis 50 kg Zement, wobei der Zementsack (1) zumindest ein Laminat (2) mit zumindest einer ersten und eine zweiten Lage (3, 5) als Sackwand (6) aufweist, die erste Lage (3) ein Film und die zweite Lage (5) ein Vlies sind, die miteinander verbunden sind, die eine Barrierewirkung für Flüssigkeit aufweisen, wobei das Vlies eine höhere Festigkeit zur Verfügung stellt als der Film, und dass eine Innenlage (7) und eine Außenlage (8) des flexiblen Zementsacks (1) jeweils luftdurchlässig sind, wobei das Laminat (2) perforiert ist, wobei eine Perforation eine Durchdringung des Films in das Vlies bewirkt, wobei die Perforation eine semipermeable Membran schafft, bei der Flüssigkeit nicht in den Baumaterialsack (1) eindringen, Luft jedoch aus dem Baumaterialsack (1) entweichen kann.

2. Zementsack (1) nach Anspruch 1, **dadurch gekennzeichnet, dass** das Laminat (2) luftdurchlässig ist.

3. Zementsack (1) nach Anspruch 2, **dadurch gekennzeichnet, dass** das Vlies die Außenlage (8) bildet und der Film die Innenlage (7).

4. Zementsack (1) nach Anspruch 1, **dadurch gekennzeichnet, dass** eine kegelförmige Perforation sich vom Film in das Vlies erstreckt.

5. Zementsack (1) nach einem der vorhergehenden Ansprüche 1 bis 4, **dadurch gekennzeichnet, dass** die Perforationen Mikroperforationen sind.

6. Zementsack (1) nach einem der vorhergehenden Ansprüche, **dadurch gekennzeichnet, dass** das Laminat (2) einen mikroporösen Film aufweist.

7. Zementsack (1) nach einem der vorhergehenden Ansprüche, **dadurch gekennzeichnet, dass** Öffnungen im Laminat (2) vorhanden sind, die sich verschließen bei Nutzung des Baumaterialsacks, vorzugsweise bei Druckwirkung.

8. Zementsack (1) nach einem der vorhergehenden Ansprüche, **dadurch gekennzeichnet, dass** bei einer Außenbelastung des Baumaterialsacks (1) sich im Film vorhandene Öffnungen schließen, vorzugsweise bei Druckwirkung.

9. Zementsack (1) nach einem der vorhergehenden Ansprüche, **dadurch gekennzeichnet, dass** die Lagen des Laminats (2) miteinander verklebt sind.

10. Zementsack (1) nach einem der vorhergehenden Ansprüche, **dadurch gekennzeichnet, dass** der Film auf das Vlies extrudiert ist.

11. Zementsack (1) nach einem der vorhergehenden Ansprüche, **dadurch gekennzeichnet, dass** das Vlies zumindest opaque ist.

12. Zementsack (1) nach einem der vorhergehenden Ansprüche, **dadurch gekennzeichnet, dass** das Laminat (2) eine Verstärkung aufweist, vorzugsweise ein Gittermaterial.

**13.** Zementsack (1) nach einem der vorhergehenden Ansprüche, **dadurch gekennzeichnet, dass** das Laminat (2) eine Luftdurchlässigkeit nach EDANA Norm 140.1 von zumindest 20 l/m$^2$/s aufweist.

**14.** Zementsack (1) nach einem der vorhergehenden Ansprüche, **dadurch gekennzeichnet, dass** ein Material des Vlies und ein Material des Films zumindest durch Hitzeeinwirkung miteinander verklebt sind, insbesondere verschweisst.

**15.** Zementsack (1) nach einem der vorhergehenden Ansprüche, **dadurch gekennzeichnet, dass** das Laminat (2) mit einer Kennzeichnung versehen ist, die vorzugsweise gedruckt und/oder profiliert ist.

**16.** Zementsack (1) nach einem der vorhergehenden Ansprüche, **dadurch gekennzeichnet, dass** zumindest das Laminat (2) biologisch abbaubar ist.

**17.** Verfahren zur Herstellung eines flexiblen Zementsacks (1) für schütt- und rieselfähigen Zement, vorzugsweise nach einem der vorhergehenden Ansprüche, wobei ein luftdurchlässiges, aber wasserundurchlässiges Laminat (2) als zumindest Seitenwand des Baumaterialsacks (1) genutzt wird, wobei ein Vlies und ein Film im Laminat (2) verwendet werden, die eine Barrierewirkung für Flüssigkeit aufweisen, wobei das Vlies eine höhere Festigkeit zur Verfügung stellt als der Film, wobei das Laminat (2) perforiert ist, wobei eine Perforation eine Durchdringung des Films in das Vlies bewirkt, wobei die Perforation eine semipermeable Membran schafft, bei der Flüssigkeit nicht in den Baumaterialsack (1) eindringen, Luft jedoch aus dem Baumaterialsack (1) entweichen kann..

**18.** Verfahren nach Anspruch 17, **dadurch gekennzeichnet, dass** ein Laminat (2) erzeugt wird, dass im ungefüllten Zustand des Zementsacks (1) zunächst zumindest wasserdampfdurchlässig, vorzugsweise aber wasserdurchlässig, nach Befüllen des Zementsacks (1) aber wasserundurchlässig wird.

**19.** Verfahren nach einem der vorhergehenden Ansprüche, **dadurch gekennzeichnet, dass** das Laminat (2) weiterverarbeitet wird, wobei eine Innenfläche des Zementsacks (1) durch den Film gebildet wird und eine Außenfläche des Zementsacks (1) durch das Vlies.

**20.** Verfahren nach einem der vorhergehenden Ansprüche, **dadurch gekennzeichnet, dass** in einer ersten Station (11) das Laminat (2) und aus dem Laminat (2) in einer zweiten Station (12) der Zementsack (1) hergestellt wird, wobei ein Transport des Laminats (2) zwischen der ersten und der zweiten Station (11, 12) innerhalb eines Betriebsgeländes, insbesondere eines Gebäudes erfolgt, und eine Befüllung des Zementsacks (1) mit dem schüttfahigen Material in einer dritten Station erfolgt, wobei eine Vielzahl an Zementsäcken zur automatischen Bestückung einer automatischen Befüllung in der dritten Station zusammengestellt werden.

**21.** Verfahren nach einem der vorhergehenden Ansprüche, **dadurch gekennzeichnet, dass** in einer ersten Station (11) mittels einer Spinnvliesvorrichtung (22) ein Spinnvlies hergestellt wird und in einer Laminieranlage mit einem Filmmaterial verbunden wird, wobei eine Herstellung einer Luftdurchlässigkeit des Laminats (2) nachfolgt.

**22.** Verfahren nach einem der vorhergehenden Ansprüche, **dadurch gekennzeichnet, dass** eine Perforierung des Laminats (2) unter Wärmeeinwirkung vollzogen wird, wobei eine Nadelperforationseinrichtung in einem Bereich ihrer Nadeln auf eine Temperatur oberhalb einer Schmelzpunkttemperatur des Films und einer Glasübergangstemperatur des Vlieses aufgeheizt wird.

**23.** Verfahren nach einem der vorhergehenden Ansprüche, **dadurch gekennzeichnet, dass** das Laminat (2) bis zu einem größten Durchmesser der Perforationen von maximal 2 mm perforiert wird.

**24.** Verfahren nach Anspruch 22 oder 23, **dadurch gekennzeichnet, dass** das Laminat (2) bis zu einem größten Durchmesser der Perforationen von maximal 0,4 mm perforiert wird.

**25.** Verfahren nach einem der vorhergehenden Ansprüche, **dadurch gekennzeichnet, dass** ein Vlies verwendet wird, bei dem zumindest ein erstes und ein zweites Polymer zusammen eine Vliesfaser bilden und wobei zumindest eines der beiden Polymere mit einem Material des Films aufgrund von Hitzeeinwirkung zumindest verklebt, vorzugsweise verschweißt wird, wobei eine Stabilisierung von trichterförmig verlaufenden Öffnungen erfolgt.

**26.** Verfahren nach einem der vorhergehenden Ansprüche, **dadurch gekennzeichnet, dass** Öffnungen im Laminat (2) gebildet werden, die vorzugsweise bei Druckwirkung sich verschließen.

**27.** Verfahren nach Anspruch 26, **dadurch gekennzeichnet, dass** bei einer Außenbelastung des Zementsacks (1) sich im Film vorhandene Öffnungen schließen.

**Claims**

1. Cement bag for transporting and storing defined portions of pourable and free-flowing cement, preferably at least 15 kg to 50 kg of cement, which cement bag (1) comprises at least one laminate (2) with at least a first and a second layer (3, 5) serving as a bag wall (6), the first layer (3) being a film and the second layer (5) being a nonwoven material which are joined to one another and which have a barrier effect to liquid, **characterised in that** the nonwoven material affords a higher strength than the film and an inner layer (7) and an outer layer (8) of the flexible cement bag (1) are respectively permeable to air, wherein the laminate (2) is perforated, wherein a perforation causes the film to penetrate the nonwoven material, wherein the perforation creates a semi-permeable membrane so that liquid is not able to penetrate the construction material bag (1) but air can escape from the construction material bag (1).

2. Cement bag (1) as claimed in claim 1, **characterised in that** the laminate (2) is air permeable.

3. Cement bag (1) as claimed in claim 2, **characterised in that** the nonwoven material forms the outer layer (8) and the film forms the inner layer (7).

4. Cement bag (1) as claimed in claim 1, **characterised in that** a wedge-shaped perforation extends from the film into the nonwoven material.

5. Cement bag (1) as claimed in one of preceding claims 1 to 4, **characterised in that** the perforations are micro-perforations.

6. Cement bag (1) as claimed in one of the preceding claims, **characterised in that** the laminate (2) has a micro-porous film.

7. Cement bag (1) as claimed in one of the preceding claims, **characterised in that** orifices are provided in the laminate (2) which close when the construction material bag is in use, preferably due to the effect of pressure.

8. Cement bag (1) as claimed in one of the preceding claims, **characterised in that** when the construction material bag (1) is subjected to load from outside, orifices provided in the film close, preferably due to the effect of pressure.

9. Cement bag (1) as claimed in one of the preceding claims, **characterised in that** the layers of the laminate (2) are bonded to one another.

10. Cement bag (1) as claimed in one of the preceding claims, **characterised in that** the film is extruded onto the nonwoven material.

11. Cement bag (1) as claimed in one of the preceding claims, **characterised in that** the nonwoven material is at least opaque.

12. Cement bag (1) as claimed in one of the preceding claims, **characterised in that** the laminate (2) has a reinforcement, preferably a lattice material.

13. Cement bag (1) as claimed in one of the preceding claims, **characterised in that** the laminate (2) has a permeability to air of at least 20 l/m$^2$/s based on EDANA standard 140.1.

14. Cement bag (1) as claimed in one of the preceding claims, **characterised in that** a material of the nonwoven material and a material of the film are bonded to one another due at least to the effect of heat, in particular welded.

15. Cement bag (1) as claimed in one of the preceding claims, **characterised in that** the laminate (2) is provided with an identifying marking, which is preferably printed and/or profiled.

16. Cement bag (1) as claimed in one of the preceding claims, **characterised in that** at least the laminate (2) is biologically degradable.

17. Method of producing a flexible cement bag (1) for pourable and free-flowing cement, preferably as claimed in one of the preceding claims, for which an air permeable but water impermeable laminate (2) is used for at least a side wall of the construction material bag (1), and a nonwoven material and a film which have a barrier effect with respect to water are used in the laminate (2), and the nonwoven material affords a higher strength than the film, wherein the laminate (2) is perforated, wherein a perforation causes the film to penetrate the nonwoven material, wherein the perforation creates a semi-permeable membrane so that liquid is not able to penetrate the construction material bag (1) but air can escape from the construction material bag (1).

18. Method as claimed in claim 17, **characterised in that** a laminate (2) is produced which is initially at least permeable to vapour but preferably permeable to water when the cement bag (1) is in the unfilled state but becomes impermeable to water once the cement bag (1) has been filled.

19. Method as claimed in one of the preceding claims, **characterised in that** the laminate (2) is subjected to further processing, whereby an inner surface of the cement bag (1) is formed by the film and an outer surface of the cement bag (1) is formed by the nonwoven material.

20. Method as claimed in one of the preceding claims, **characterised in that** the laminate (2) is produced at a first station (11) and the cement bag (1) is produced from the laminate (2) at a second station (12), the laminate (2) being transported between the first and the second station (11, 12) within a production facility, in particular a building, and the cement bag (1) is filled with the free-flowing material at a third station, a plurality of cement bags being assembled at the third station for automatically equipping an automatic filling system.

21. Method as claimed in one of the preceding claims, **characterised in that** a spunbond material is produced by means of a spunbonding device (22) at a first station (11) and is joined to a film material in a laminating plant, after which the laminate (2) is rendered permeable to air.

22. Method as claimed in one of the preceding claims, **characterised in that** the laminate (2) is perforated under the effect of heat and a needle perforating unit is heated in a region of its needles to a temperature above a melting temperature of the film and a glass transition temperature of the nonwoven material.

23. Method as claimed in one of the preceding claims, **characterised in that** the laminate (2) is perforated up to a maximum diameter of the perforations of at most 2 mm.

24. Method as claimed in claim 22 or 23, **characterised in that** the laminate (2) is perforated up to a maximum diameter of the perforations of at most 0.4 mm.

25. Method as claimed in one of the preceding claims, **characterised in that** a nonwoven material of the type in which a first and a second polymer together form a nonwoven fibre is used, and at least one of the two polymers is at least bonded to a material of the film under the effect of heat, preferably welded, and orifices extending in a funnel shape are stabilised.

26. Method as claimed in one of the preceding claims, **characterised in that** orifices are formed in the laminate (2) which preferably close under the effect of pressure.

27. Method as claimed in claim 26, **characterised in that** orifices provided in the film close when the cement bag (1) is subjected to load from outside.

**Revendications**

1. Sac de ciment pour le transport et le stockage de portions définies d'un ciment apte à être déversé et fluide, de préférence d'au moins 15 kg à 50 kg de ciment, le sac de ciment (1) comprenant au moins un stratifié (2) avec au moins une première et une deuxième couche (3, 5) en tant que paroi de sac (6), la première couche (3) étant un film et la deuxième couche (5) étant un non-tissé, ces deux couches étant reliées entre elles et présentant une action de barrière contre les liquides, **caractérisé en ce que** le non-tissé présente une résistance supérieure à celle du film et **en ce qu'**une couche interne (7) et une couche externe (8) du sac de ciment flexible (1) sont perméables à l'air, le stratifié (2) étant perforé, une perforation provoquant une pénétration du film dans le non-tissé, la perforation créant une membrane semi-perméable, grâce à laquelle le liquide ne peut pas pénétrer dans le sac de matériau de construction (1), mais l'air peut s'échapper du sac de matériau de construction (1).

2. Sac de ciment (1) selon la revendication 1, **caractérisé en ce que** le stratifié (2) est perméable à l'air.

3. Sac de ciment (1) selon la revendication 2, **caractérisé en ce que** le non-tissé constitue la couche externe (8) et le film la couche interne (7).

4. Sac de ciment (1) selon la revendication 1, **caractérisé en ce qu'**une perforation conique s'étend du film vers le non-tissé.

5. Sac de ciment (1) selon l'une des revendications précédentes 1 à 4, **caractérisé en ce que** les perforations sont des micro-perforations.

6. Sac de ciment (1) selon l'une des revendications précédentes, **caractérisé en ce que** le stratifié (2) présente un film microporeux.

7. Sac de ciment (1) selon l'une des revendications précédentes, **caractérisé en ce que** des ouvertures existent dans le stratifié (2), qui se referment lors de l'utilisation du sac de matériau de construction, de préférence lors de l'application d'une pression.

8. Sac de ciment (1) selon l'une des revendications précédentes, **caractérisé en ce que**, lors d'une sollicitation externe du sac de matériau de construction (1), les ouvertures présentes dans le film se ferment, de préférence lors de l'application d'une pression.

9. Sac de ciment (1) selon l'une des revendications précédentes, **caractérisé en ce que** les couches du stratifié (2) sont collées entre elles.

10. Sac de ciment (1) selon l'une des revendications précédentes, **caractérisé en ce que** le film est extrudé sur le non-tissé.

11. Sac de ciment (1) selon l'une des revendications précédentes, **caractérisé en ce que** le non-tissé est au moins opaque.

12. Sac de ciment (1) selon l'une des revendications précédentes, **caractérisé en ce que** le stratifié (2) présente un renforcement, de préférence un matériau à grille.

13. Sac de ciment (1) selon l'une des revendications précédentes, **caractérisé en ce que** le stratifié (2) présente une perméabilité à l'air selon la norme EDANA 140.1 d'au moins 20 l/m$^2$/s.

14. Sac de ciment (1) selon l'une des revendications précédentes, **caractérisé en ce qu'**un matériau du non-tissé et un matériau du film sont collés ensemble, plus particulièrement soudés, au moins par un procédé thermique.

15. Sac de ciment (1) selon l'une des revendications précédentes, **caractérisé en ce que** le stratifié (2) est muni d'une identification de préférence imprimée et/ou profilée.

16. Sac de ciment (1) selon l'une des revendications précédentes, **caractérisé en ce qu'**au moins le stratifié (2) est biodégradable.

17. Procédé de fabrication d'un sac de ciment (1) flexible pour un ciment apte à être déversé et fluide, de préférence selon l'une des revendications précédentes, un stratifié (2) perméable à l'air mais imperméable à l'eau étant utilisé au moins comme la paroi latérale du sac de matériau de construction (1), un non-tissé et un film étant utilisés dans le stratifié (2), qui présentent une action de barrière pour les liquides, le non-tissé présentant une résistance supérieure à celle du film, le stratifié (2) étant perforé, une perforation provoquant une pénétration du film dans le non-tissé, la perforation créant une membrane semi-perméable, grâce à laquelle le liquide ne peut pas pénétrer dans le sac de matériau de construction (1), mais l'air peut s'échapper du sac de matériau de construction (1).

18. Procédé selon la revendication 17, **caractérisé en ce qu'**un stratifié (2) est produit, qui, lorsque le sac de ciment (1) n'est pas rempli, est d'abord au moins perméable à la vapeur d'eau, mais de préférence perméable à l'eau, et qui devient imperméable à l'eau après le remplissage du sac de ciment (1).

19. Procédé selon l'une des revendications précédentes, **caractérisé en ce que** le stratifié (2) est traité, une surface interne du sac de ciment (1) étant constituée du film et une surface externe du sac de ciment (1) étant constituée du non-tissé.

20. Procédé selon l'une des revendications précédentes, **caractérisé en ce que**, dans une première station (11), le stratifié (2) est fabriqué et, à partir du stratifié (2), dans une deuxième station (12), le sac de ciment (1) est fabriqué, un transport du stratifié (2) entre la première et la deuxième station (11, 12) ayant lieu à l'intérieur d'une zone de l'entreprise, plus particulièrement d'un bâtiment et un remplissage du sac de ciment (1) avec le matériau pouvant être déversé ayant lieu dans une troisième station, une pluralité de sacs de ciment étant assemblés dans la troisième station pour le chargement automatique d'un remplissage automatique.

21. Procédé selon l'une des revendications précédentes, **caractérisé en ce que**, dans une première station (11), un non-tissé est fabriqué à l'aide d'un dispositif de non-tissé (22) et relié avec un matériau sous la forme d'un film dans une installation de stratifié, une perméabilité à l'air du stratifié (2) étant ensuite établie.

22. Procédé selon l'une des revendications précédentes, **caractérisé en ce qu'**une perforation du stratifié (2) est réalisée à l'aide d'un procédé thermique, un dispositif de perforation à aiguilles étant chauffé, au niveau de ses aiguilles, à une température supérieure à une température de fusion du film et à une température de transition vitreuse du non-tissé.

23. Procédé selon l'une des revendications précédentes, **caractérisé en ce que** le stratifié (2) est perforé jusqu'à un diamètre maximal des perforations de 2 mm maximum.

24. Procédé selon la revendication 22 ou 23, **caractérisé en ce que** le stratifié (2) est perforé jusqu'à un diamètre maximal des perforations de 0,4 mm maximum.

25. Procédé selon l'une des revendications précédentes, **caractérisé en ce qu'**un non-tissé est utilisé, dans lequel au moins un premier et un deuxième polymère forment ensemble une fibre de non-tissé et au moins un des deux polymères étant au moins collé, de préférence soudé, avec un matériau du film grâce à procédé thermique, une stabilisation des ouvertures en forme d'entonnoirs étant effectuée.

26. Procédé selon l'une des revendications précédentes, **caractérisé en ce que** les ouvertures sont formées dans le stratifié (2), qui se ferment lors de l'application d'une pression.

**27.** Procédé selon la revendication 26, **caractérisé en ce que**, lors d'une sollicitation externe du sac de ciment (1), les ouvertures présentes dans le film se ferment.

Fig. 1

Fig. 2

EP 2 137 076 B2

Fig. 3

Fig. 4

Fig. 5

Fig. 6

13

1

11   12

Fig. 7

2

2

37

3

38

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3613749 A1
- DE 69806168
- AT 413273 B
- WO 2005012121 A
- DE 102004013469 A1
- CN 2196086 Y
- DE 10132196 A1

- EP 1425143 A1
- EP 1425161 A1
- DE 19843109 A1
- DE 10102501 A1
- DE 10035597 A1
- DE 10036780 A1
- EP 1198339 B1